# EUROPEAN PATENT APPLICATION

(11) **EP 4 474 199 A2**
(43) Date of publication of application: **11.12.2024**
(21) Application number: 24176574.2
(22) Date of filing: 17.05.2024
(51) Int. Cl.: B60L 7/18, B60L 15/02, B60L 15/20

(54) **INDUSTRIAL VEHICLE**

(30) Priority: 09.06.2023 JP 2023095634
(71) Applicant: KABUSHIKI KAISHA TOYOTA JIDOSHOKKI, Kariya-shi, Aichi 448-8671 (JP)
(72) Inventor: ISHIMURA, Shota, Aichi, 448-8671 (JP); YAMADA, Takefumi, Aichi, 448-8671 (JP)
(74) Representative: TBK

(57) **Abstract**

An industrial vehicle (10) includes a traveling motor (24), an inverter (22), and a controller (30). The controller (30) calculates an error between a rotational speed of the traveling motor (24) and a target rotational speed. The controller (30) calculates an output ratio based on the error, a proportional gain, and an integral gain. The controller (30) calculates a toque current command value. The controller (30) converts the toque current command value into a command value for the inverter (22) to perform a control such that the rotational speed of the traveling motor (24) follows the target rotational speed. While the industrial vehicle (10) brakes to a stop, the controller (30) sets the integral gain based on a maximum value of the output ratio in a state where the rotational speed of the traveling motor (24) is equal to or less than a base rotational speed.

## Description

### BACKGROUND ART

The present invention relates to an industrial vehicle.

A vehicle disclosed in Japanese Patent Application Publication No. 2020-068596 (hereinafter, referred to as a first publication) includes a traveling motor, an inverter that drives the traveling motor, and a controller that controls the inverter. The controller causes the vehicle to travel by power-running operation of the traveling motor. The controller brakes the vehicle by regenerative operation of the traveling motor. When the controller brakes the vehicle by the regenerative operation of the traveling motor, the controller performs a feedback control such that a rotational speed of the traveling motor follows a target rotational speed. A proportional-integral control is used as the feedback control, for example. The industrial vehicle disclosed in Japanese Patent Application Publication No. 2023-046547 transports a load.

In the feedback control as disclosed in the first publication, a proportional gain and an integral gain are set. The control based on the proportional gain and the integral gain causes the rotational speed of the traveling motor to follow the target rotational speed. When the integral gain is set in controlling an industrial vehicle similarly to the first publication, the integral gain when the industrial vehicle brakes to a stop is set such that the rotational speed of the traveling motor smoothly follows the target rotational speed in a state where the industrial vehicle has no load to transport. Here, when the industrial vehicle that transports a load brakes to a stop, the rotational speed of the traveling motor may not smoothly follow the target rotational speed.

### SUMMARY

In accordance with an aspect of the present invention, there is provided an industrial vehicle that transports a load. The industrial vehicle includes a traveling motor, an inverter that drives the traveling motor, and a controller that controls the inverter. The controller calculates an error between a rotational speed of the traveling motor and a target rotational speed. The controller calculates an output ratio of the traveling motor based on the error, a proportional gain, and an integral gain. The controller calculates a toque current command value based on the output ratio and a torque current curve. The controller converts the toque current command value into a command value for the inverter to perform a control of the traveling motor such that the rotational speed of the traveling motor follows the target rotational speed. While the industrial vehicle brakes to a stop, the controller sets the integral gain based on a maximum value of the output ratio in a state where the rotational speed of the traveling motor is equal to or less than a base rotational speed.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the embodiments together with the accompanying drawings in which:
FIG. 1 is a perspective view illustrating an industrial vehicle;
FIG. 2 is a schematic configuration diagram of the industrial vehicle;
FIG. 3 is a schematic configuration diagram illustrating a function of an output ratio determiner;
FIG. 4 is a flowchart showing a maximum output ratio calculation control;
FIG. 5 is a flowchart showing an integral gain calculation control;
FIG. 6 is a graph showing a corresponding relationship between a rotational speed of a traveling motor and an output ratio at a start of deceleration of the industrial vehicle;
FIG. 7 is a graph showing a corresponding relationship between a load and a maximum output ratio;
FIG. 8 is a graph showing a corresponding relationship between the maximum output ratio and an integral gain;
FIG. 9 is a graph showing a rotational speed command, a target rotational speed, an output ratio, and an actual rotational speed when the industrial vehicle transporting the load brakes to a stop in a state where a no-load integral gain is set as the integral gain according to a comparative example;
FIG. 10 is a graph showing a rotational speed command, a target rotational speed, an output ratio, and an actual rotational speed when the industrial vehicle in a no-load state brakes to a stop on a flat road;
FIG. 11 is a graph showing a rotational speed command, a target rotational speed, an output ratio, and an actual rotational speed when the industrial vehicle in a maximum load state brakes to a stop on the flat road; and
FIG. 12 is a graph showing a rotational speed command, a target rotational speed, an output ratio, and an actual rotational speed when the industrial vehicle in the maximum load state brakes to a stop on a slope.

### DETAILED DESCRIPTION OF THE EMBODIMENTS

The following will describe an embodiment of an industrial vehicle in the present invention.

### <Industrial vehicle>

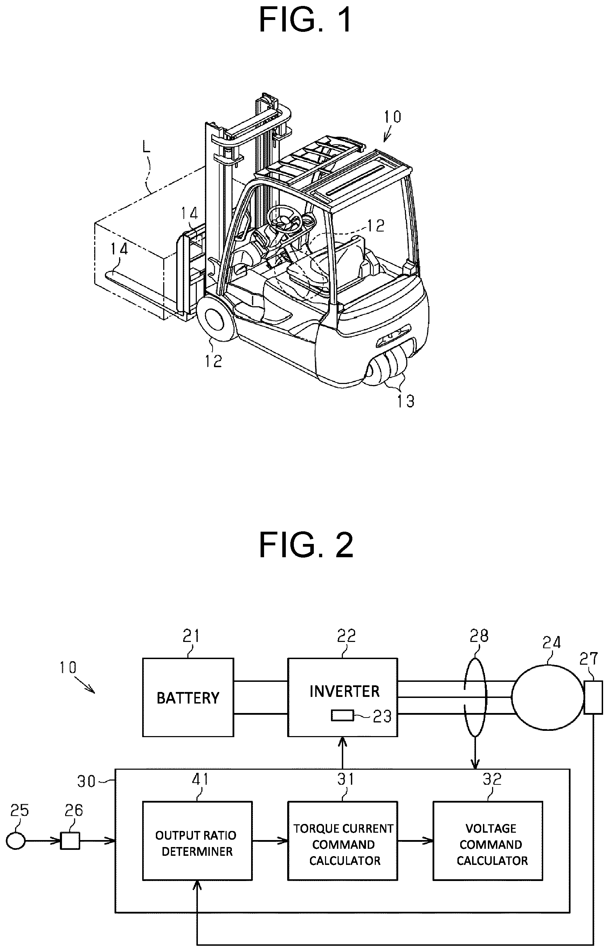

As illustrated in FIG. 1, an industrial vehicle 10 includes driving wheels 12 and steering wheels 13. The industrial vehicle 10 is a forklift truck. The industrial vehicle being the forklift truck may be a counter-type forklift truck or a reach-type forklift truck. The industrial vehicle 10 also includes forks 14. A load L is loaded on the forks 14. The industrial vehicle 10 is capable of transporting the load L loaded on the forks 14.

As illustrated in FIG. 2, the industrial vehicle 10 includes a battery 21. The battery 21 is formed of a plurality of power storage devices connected to each other, for example. Any power storage device may be used as long as it is chargeable and dischargeable. Examples of the power storage devices are a lead-acid battery, a lithium ion secondary battery, and a nickel-metal hydride battery.

The industrial vehicle 10 includes an inverter 22. The inverter 22 is, for example, a three-phase inverter that converts DC power into three-phase AC power. The inverter 22 is electrically connected to the battery 21. The inverter 22 converts the DC power input from the battery 21 into the AC power, and outputs the AC power. The inverter 22 includes, for example, switching elements 23, and converts the DC power into the AC power by switching operation of the switching elements 23.

The industrial vehicle 10 includes a traveling motor 24. The traveling motor 24 is, for example, a three-phase AC rotating electrical machine. The traveling motor 24 is driven by the inverter 22. The traveling motor 24 serves as an electric motor while power is supplied from the inverter 22 to the traveling motor 24 to generate a rotational driving force. This rotational driving force is transmitted to the driving wheels 12 through an axel, which causes the industrial vehicle 10 to travel. The traveling motor 24 serves as a power generator while the industrial vehicle 10 brakes to a stop to generate regenerative power. The regenerative power generated by the traveling motor 24 is supplied to the battery 21 through the inverter 22. Thus, the traveling motor 24 is a motor generator that performs power-running operation and regenerative operation.

The industrial vehicle 10 brakes by a regenerative braking force generated by the traveling motor 24. The industrial vehicle 10 does not include a mechanical brake such as a disc brake or a drum brake. That is, the industrial vehicle 10 includes only the traveling motor 24 as a braking device.

When the industrial vehicle 10 includes the plurality of driving wheels 12, the traveling motor 24 may be provided for each of the driving wheels 12. In this case, the inverter 22 also may be provided for each traveling motor 24.

The industrial vehicle 10 includes an accelerator member 25. The accelerator member 25 is a member that is operated for driving the industrial vehicle 10. In the industrial vehicle 10 being the counter-type forklift truck, the accelerator member 25 is an accelerator pedal, for example. In the industrial vehicle 10 being the reach-type forklift truck, the accelerator member 25 is a direction lever, for example.

The industrial vehicle 10 includes an accelerator sensor 26. The accelerator sensor 26 detects an amount of operation of the accelerator member 25. The accelerator sensor 26 outputs electrical signals in accordance with the amount of operation of the accelerator member 25.

The industrial vehicle 10 includes a rotational speed sensor 27. The rotational speed sensor 27 outputs electrical signals in accordance with a rotational speed [rpm] of the traveling motor 24. The rotational speed sensor 27 is, for example, a resolver or an encoder.

The industrial vehicle 10 includes a phase current detector 28. The phase current detector 28 detects phase currents flowing through the traveling motor 24. The phase current detector 28 detects the phase currents in at least two phases. Here, the phase current detector 28 may detect the phase currents in the two phases of three phases, and calculate a phase current in the remaining phase based on the detected phase currents in the two phases.

The industrial vehicle 10 includes a controller 30. The controller 30 includes a processor and a storage unit. Examples of the processor include a CPU (Central Processing Unit), a GPU (Graphics Processing Unit), and a DSP (Digital Signal Processor). The storage unit includes a RAM (Random Access Memory) and a ROM (Read Only Memory). A program for operating the industrial vehicle 10 is stored in the storage unit. The storage unit stores program codes or commands configured to cause the processor to execute processes. The storage unit, that is, a computer readable medium, includes any media accessible by general or dedicated computers. The controller 30 may include a hardware circuit, such as an ASIC (Application Specific Integrated Circuit) or an FPGA (Field Programmable Gate Array). The controller 30, which is a processing circuit, may include one or more processors that operate according to a computer program, one or more hardware circuits such as the ASIC or the FPGA, or a combination thereof.

The controller 30 receives the electrical signals from the accelerator sensor 26. The controller 30 obtains an amount of accelerator operation based on the electrical signals received from the accelerator sensor 26. The controller 30 receives electrical signals from the rotational speed sensor 27. The controller 30 obtains the rotational speed of the traveling motor 24 based on the electrical signals received from the rotational speed sensor 27. Hereinafter, the rotational speed of the traveling motor 24 obtained due to the rotational speed sensor 27 is appropriately referred to as an actual rotational speed. A positive or negative sign of the actual rotational speed [rpm] depends on a rotational direction of the traveling motor 24. For example, while the traveling motor 24 rotates in a clockwise direction when the actual rotational speed has the positive sign, the traveling motor 24 rotates in a counterclockwise direction when the actual rotational speed has the negative sign.

The controller 30 controls the inverter 22. The controller 30 includes an output ratio determiner 41, a torque current command calculator 31, and a voltage command calculator 32. The output ratio determiner 41, the torque current command calculator 31, and the voltage command calculator 32 each correspond to a functional unit which is caused to function by the controller 30 executing a predetermined process.

The output ratio determiner 41 determines an output ratio [%] of the traveling motor 24.

The torque current command calculator 31 calculates a toque current command value. The torque current command value is sometimes referred to as a q-axis current command value. The torque current command calculator 31 calculates the torque current command value based on the output ratio determined by the output ratio determiner 41 and a torque current curve.

The voltage command calculator 32 calculates a voltage command value based on an error between the torque current command value and a torque current and an error between an excitation current command value and an excitation current. The excitation current command value is calculated by the controller 30. The excitation current command value is sometimes referred to as a d-axis current command value. The torque current is a component of the current flowing through the traveling motor 24, which generates torque. The excitation current is a component of the current flowing through the traveling motor 24, which generates magnetic flux. The torque current and the excitation current are calculated from the phase currents. The voltage command calculator 32 calculates the voltage command value that makes a future error between the toque current command value and the toque current and a future error between the excitation current command value and the excitation current smaller than the current error between the toque current command value and the toque current and the current error between the excitation current command value and the excitation current. The inverter 22 is controlled based on the voltage command value. The voltage command value is a command value for the inverter 22. Thus, the controller 30 converts the torque current command value into the command value for the inverter 22 to control the traveling motor 24 so that the rotational speed of the traveling motor 24 follows the target rotational speed.

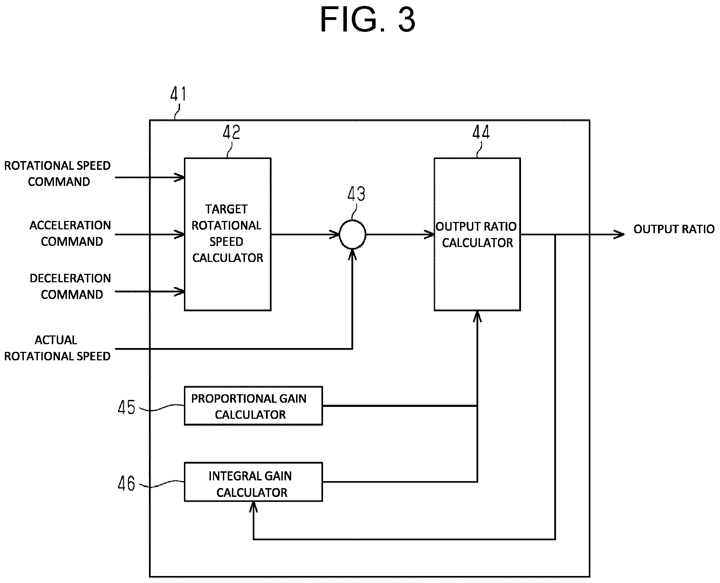

As illustrated in FIG. 3, the output ratio determiner 41 includes a target rotational speed calculator 42, a subtraction unit 43, an output ratio calculator 44, a proportional gain calculator 45, and an integral gain calculator 46.

The target rotational speed calculator 42 calculates the target rotational speed based on a rotational speed command, an acceleration command, and a deceleration command. The rotational speed command is calculated based on the amount of accelerator operation, for example. For example, the acceleration command is calculated based on a past error between the target rotational speed and the actual rotational speed. For example, the deceleration command is calculated based on the past error between the target rotational speed and the actual rotational speed. The target rotational speed is a target value of the rotational speed that the actual rotational speed follows at the acceleration instructed by the acceleration command or at the deceleration instructed by the deceleration command.

The subtraction unit 43 calculates a speed error that is an error between the target rotational speed and the actual rotational speed.

The output ratio calculator 44 calculates the output ratio based on the speed error, a proportional gain, and an integral gain. The output ratio calculator 44 calculates the output ratio that causes the future speed error to approach zero, based on the proportional gain and the integral gain. The output ratio determiner 41 calculates the output ratio by a proportional-integral control as a feedback control. While the industrial vehicle 10 brakes to a stop, the output ratio determiner 41 performs a control such that a correction based on an integral term used in the proportional-integral control is applied to the speed error the when the target rotational speed is zero. While the industrial vehicle 10 brakes to the stop, the output ratio determiner 41 performs a control such that the correction based on the integral term used in the proportional-integral control is not applied to the speed error when the target rotational speed is a value excluding zero.

When the traveling motor 24 performs the power-running operation, the actual rotational speed and the output ratio have the same positive or negative sign. When the traveling motor 24 performs the regenerative operation, the actual rotational speed and the output ratio have opposite positive or negative sign. For example, in the power-running operation of the traveling motor 24, when the actual rotational speed has a positive value, the output ratio also has a positive value. For example, in the regenerative operation of the traveling motor 24, when the actual rotational speed has a positive value, the output ratio has a negative value.

The proportional gain calculator 45 calculates the proportional gain. The proportional gain is calculated based on the amount of accelerator operation and the actual rotational speed of the traveling motor 24, for example. The proportional gain is a coefficient of a proportional term used in the proportional-integral control.

The integral gain calculator 46 calculates the integral gain. The integral gain is calculated based on the output ratio. The integral gain is a coefficient of the integral term used in the proportional-integral control. The following will describe a control performed by the integral gain calculator 46.

### <Maximum output ratio calculation control>

The integral gain calculator 46 performs a maximum output ratio calculation control at a predetermined control period.

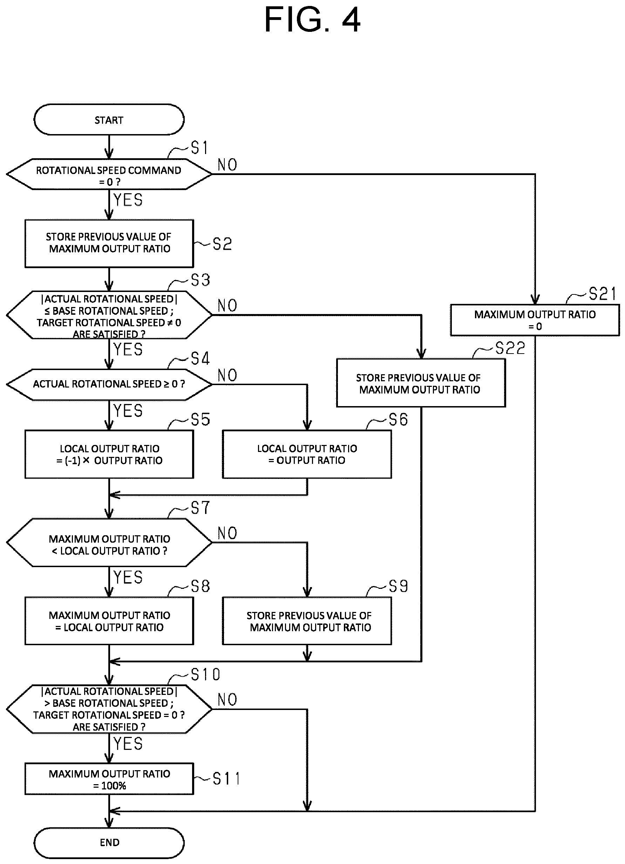

As shown in FIG. 4, in Step S1, the integral gain calculator 46 determines whether or not the rotational speed command is zero. The rotational speed command becomes zero when the accelerator member 25 is not operated. Accordingly, it is determined whether the accelerator member 25 has no longer been operated or the accelerator member 25 has been continuously operated by determining whether or not the rotational speed command is zero. If a determination result is "NO" in Step S1, the integral gain calculator 46 proceeds to Step S21. In Step S21, the integral gain calculator 46 sets the maximum output ratio to zero. That is, the integral gain calculator 46 resets the maximum output ratio, and ends the maximum output ratio calculation control. The maximum output ratio means the maximum value of the output ratio. If the determination result is "YES" in Step S1, the integral gain calculator 46 proceeds to Step S2.

In Step S2, the integral gain calculator 46 stores a previous value of the maximum output ratio.

Next, in Step S3, the integral gain calculator 46 determines whether or not an absolute value of the actual rotational speed is equal to or less than a base rotational speed and the target rotational speed is a value excluding zero. The base rotational speed is a rotational speed that is specified based on rotational speed-torque characteristics. The rotational speed-torque characteristics are characteristics of the traveling motor 24 shown in a graph in which a horizontal axis represents the rotational speed and a vertical axis represents the torque. The torque is constant until the rotational speed increases to a certain rotational speed, and the torque decreases as the rotational speed increases over the certain rotational speed. Thus, the certain rotational speed at a boundary between a range where the torque decreases as the rotational speed increases and a range where the torque is constant regardless of the rotational speed is referred to as the base rotational speed. If a determination result is "NO" in Step S3, the integral gain calculator 46 proceeds to Step S22. In Step S22, the integral gain calculator 46 stores the previous value of the maximum output ratio, and proceeds to Step S10. If the determination results is "YES" in Step S3, the integral gain calculator 46 proceeds to Step S4.

In Step S4, the integral gain calculator 46 determines whether or not the actual rotational speed is equal to or more than zero. If a determination result is "YES" in Step S4, the integral gain calculator 46 proceeds to Step S5. In Step S5, the integral gain calculator 46 sets a local output ratio, which serves as a local variable in the flowchart of FIG. 4, to a value calculated by multiplying the output ratio by -1. If the determination result is "NO" in Step S4, the integral gain calculator 46 proceeds to Step S6. In Step S6, the integral gain calculator 46 sets the local output ratio to the output ratio.

In Steps S4 and S5, when the actual rotational speed has a positive value, the output ratio has a negative value in the regenerative operation. In this case, the local output ratio is set to the output ratio multiplied by -1. The local output ratio always has a positive value regardless of whether the actual rotational speed has a positive value or a negative value by executing the processes in Steps S4 to S6. That is, the local output ratio is the output ratio always having the positive value.

Next, in Step S7, the integral gain calculator 46 determines whether or not the stored maximum output ratio is less than the local output ratio. If a determination result is "YES" in Step S7, the integral gain calculator 46 proceeds to Step S8. In Step S8, the integral gain calculator 46 sets the maximum output ratio to the local output ratio. If the determination result is "NO" in Step S7, the integral gain calculator 46 proceeds to Step S9. In Step S9, the integral gain calculator 46 stores the previous value of the maximum output ratio.

In Steps S7 and S8, when the local output ratio is more than the stored maximum output ratio, the integral gain calculator 46 sets the maximum output ratio to the local output ratio. That is, the maximum output ratio is updated to the local output ratio obtained in Steps S4 to S6. The processes in Steps S7 to S9 are executed when the determination result in Step S3 is "YES". If the determination result in Step S3 is "NO", the integral gain calculator 46 proceeds to Step S10 without executing the processes in Steps S7 to S9. If the actual rotational speed is less than or equal to the base rotational speed, the maximum output ratio is updated in Steps S7 to S9. Accordingly, the processes in Steps S7 to Step S9 are repeatedly executed until the determination result is "NO" in Step S3, so that the maximum output ratio in a state where the actual rotational speed is equal to or less than the base rotational speed is obtained . Then, when the determination result is "NO" in Step S3, the previous value of the maximum output ratio is stored, and thus, the maximum output ratio is kept at the maximum value of the output ratio in the state where the actual rotational speed is equal to or less than the base rotational speed. With the process in Step S9 executed when the determination result is "NO" in Step S7, the integral gain calculator 46 stores the maximum output ratio calculated while the rotational speed of the traveling motor 24 is kept at the base rotational speed or less. With the process in Step S8 executed when the determination result is "YES" in Step S7, the integral gain calculator 46, when the output ratio is calculated while the rotational speed of the traveling motor 24 is kept at the base rotational speed or less, determines whether or not the calculated output ratio is more than the stored maximum output ratio. Then, when the calculated output ratio is more than the stored maximum output ratio, the integral gain calculator 46 stores the calculated output ratio as a new maximum output ratio.

Next, in Step S10, the integral gain calculator 46 determines whether or not the absolute value of the actual rotational speed is more than the base rotational speed and the target rotational speed is zero. If a determination result is "YES" in Step S10, the integral gain calculator 46 proceeds to Step S11. In Step S11, the integral gain calculator 46 sets the maximum output ratio to 100 [%], and then, ends the maximum output ratio calculation control. If the determination result in Step S10 is "NO", the integral gain calculator 46 ends the maximum output ratio calculation control. During the regenerative operation of the traveling motor 24, when the absolute value of the actual rotational speed is more than the base rotational speed and the target rotational speed is zero, the output ratio calculated by the output ratio calculator 44 is set to 100 [%]. Thus, when the absolute value of the actual rotational speed is more than the base rotational speed and the target rotational speed is zero, the maximum output ratio is kept at 100 [%]. This suppresses that the maximum output ratio becomes less than 100 [%] even though the absolute value of the actual rotational speed is more than the base rotational speed and the target rotational speed is zero.

### <Integral gain calculation control>

The integral gain calculator 46 performs the integral gain calculation control at a predetermined control period. The integral gain calculation control is a control for calculating the integral gain based on the maximum output ratio stored by the maximum output ratio calculation control.

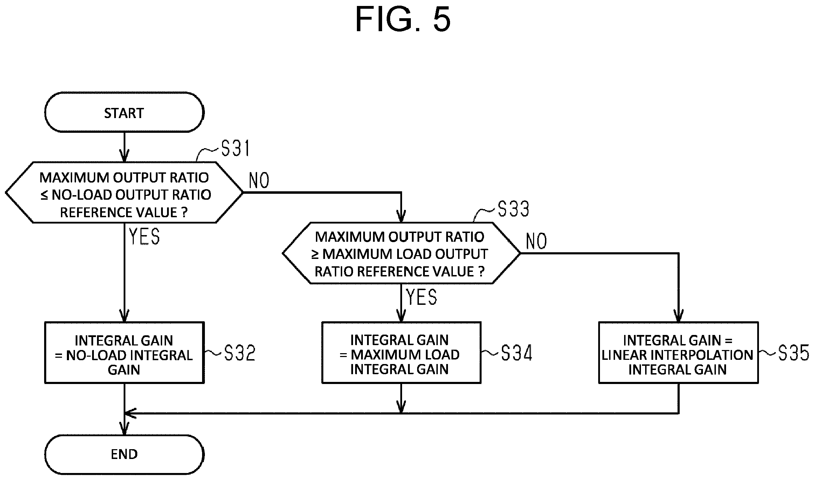

As shown in FIG. 5, in Step S31, the integral gain calculator 46 determines whether or not the stored maximum output ratio is equal to or less than a no-load output ratio reference value. The no-load output ratio reference value is a predetermined value. The following will describe the no-load output ratio reference value in detail.

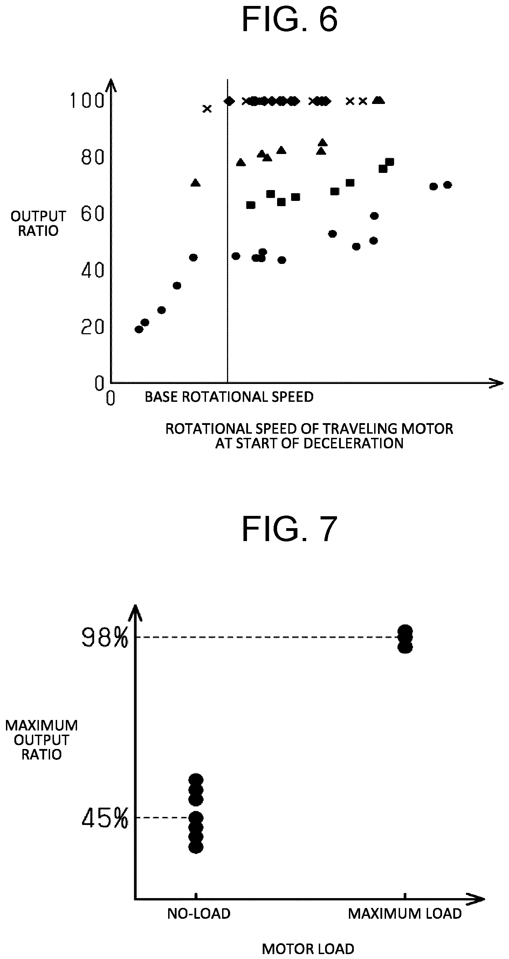

FIG. 6 shows a relationship between the output ratio and the rotational speed of the traveling motor 24 at a start of deceleration when a value of a motor load is changed. The motor load corresponds to a weight of the load L. In an example shown in FIG. 6, the motor load is set to 0 [kg], 500 [kg], 1000 [kg], 2000 [kg], or 2500 [kg]. In FIG. 6, the relationships between the output ratio and the rotational speed of the traveling motor 24 when the motor load is set to 0 [kg], 500 [kg], 1000 [kg], 2000 [kg], and 2500 [kg] are plotted by marks of circle, square, triangle, cross, and rhombus, respectively. When the motor load is 0 [kg], the industrial vehicle 10 has no load L to transport. This state is referred to as a no-load state. The motor load of 2500 [kg] is the maximum weight corresponding to a maximum loading capacity of the industrial vehicle 10. The state where the industrial vehicle 10 has the motor load of 2500 [kg] is referred to as a maximum-load state. The maximum weight of the load L corresponding to the maximum loading capacity of the industrial vehicle 10 is determined by specifications of the industrial vehicle 10, for example.

In a range where the rotational speed of the traveling motor 24 is equal to or less than the base rotational speed, the torque substantially linearly changes as the torque current increases. Accordingly, when the maximum value of the output ratio obtained in the range where the rotational speed of the traveling motor 24 is equal to or less than the base rotational speed is derived, the motor load is estimated in accordance with the magnitude of the output of the traveling motor 24.

As shown in FIG. 6, in the range where the rotational speed of the traveling motor 24 is equal to or less than the base rotational speed (hereinafter, simply called in the range of the base rotational speed or less), the output ratio decreases as the rotational speed of the traveling motor 24 at the start of deceleration decreases. In addition, the maximum value of the output ratio obtained in the range of the base rotational speed or less increases as the motor load increases. Accordingly, the motor load is estimated from the maximum value of the output ratio obtained in the range of the base rotational speed or less.

FIG. 7 shows the maximum output ratio in the no-load states that is obtained in the range of the base rotational speed or less and the maximum output ratio in the maximum load state that is obtained in the range of the base rotational speed or less, which were both measured in an experiment. From this result, the no-load output ratio reference value used for determining whether or not the industrial vehicle 10 is in the no-load state and a maximum load output ratio reference value used for determining whether or not the industrial vehicle 10 is in the maximum load state are set. For example, the maximum output ratio in the no-load state may be measured multiple times, and the no-load output ratio reference value may be set based on an average value or a median value of the measured maximum output ratios in the no-load state. For example, the maximum output ratio in the maximum load state may be measured multiple times, and the maximum load output ratio reference value may be set based on an average value or a median value of the measured maximum output ratios in the maximum load state. The no-load output ratio reference value is, for example, set to 45 [%]. The maximum load output ratio reference value is, for example, set to 98 [%]. The no-load output ratio reference value and the maximum load output ratio reference value may be set to a corresponding value for each type of the industrial vehicle 10 and each type of the traveling motor 24. The no-load output ratio reference value is set such that the maximum output ratio in the range of the base rotational speed or less becomes the no-load output ratio reference value or less when the industrial vehicle 10 has no load L to transport. The maximum load output ratio reference value is set such that the maximum output ratio in the range of the base rotational speed or less becomes the maximum load output ratio reference value or more when the industrial vehicle 10 transports the load L of the maximum weight corresponding to the maximum loading capacity of the industrial vehicle 10.

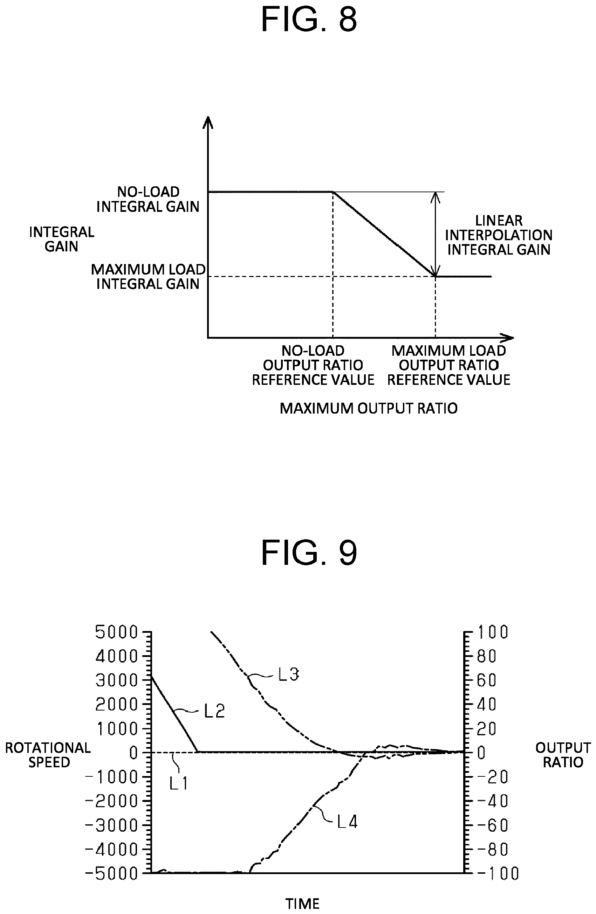

As shown in FIG. 8, the integral gain is set so as to change in accordance with the stored maximum output ratio. The integral gain is set in correspondence with each of the no-load output ratio reference value and the maximum load output ratio reference value. The integral gain in correspondence with the no-load output ratio reference value is referred to as a no-load integral gain. The no-load integral gain is set to a value suitable for the industrial vehicle 10 in the no-load state. That is, the no-load integral gain is set such that the actual rotational speed smoothly follows the target rotational speed while the industrial vehicle 10 in the no-road states brakes to a stop. The integral gain in correspondence with the maximum load output ratio reference value is referred to as a maximum load integral gain. The maximum load integral gain is set to a value suitable for the industrial vehicle 10 in the maximum load state. That is, the load integral gain is set such that the actual rotational speed smoothly follows the target rotational speed while the industrial vehicle 10 in the maximum load state brakes to a stop.

As shown in FIG. 5, if a determination result is "YES" in Step S31, the integral gain calculator 46 proceeds to Step S32. In Step S32, the integral gain calculator 46 sets the integral gain to the no-load integral gain, and ends the integral gain calculation control.

If the determination result is "NO" in Step S31, the integral gain calculator 46 proceeds to Step S33.

In Step S33, the integral gain calculator 46 determines whether or not the stored maximum output ratio is equal to or more than the maximum load output ratio reference value. The maximum load output ratio reference value is a predetermined value. If a determination result is "YES" in Step S33, the integral gain calculator 46 proceeds to Step S34. In Step S34, the integral gain calculator 46 sets the integral gain to the maximum load integral gain, and ends the integral gain calculation control.

If the determination result is "NO" in Step S33, the integral gain calculator 46 proceeds to Step S35.

In Step S35, the integral gain calculator 46 sets the integral gain to a linear interpolation integral gain, and ends the integral gain calculation control.

As shown in FIG. 8, the linear interpolation integral gain is an integral gain obtained by linear interpolation between the no-load integral gain and the maximum load integral gain. In the range of the base rotational speed or less, the maximum output ratio linearly changes as the motor load increases. Thus, the linear interpolation integral gain is set as the integral gain, so that the integral gain is set so as to change in accordance with the load.

### [Operation of the present embodiment]

When the industrial vehicle 10 is stopped, the industrial vehicle 10 brakes by the regenerative braking force generated by the traveling motor 24. Here, the controller 30 performs the control such that the actual rotational speed follows the target rotational speed.

FIGS. 9 to 12 each show a relationship among the rotational speed command, the target rotational speed, the actual rotational speed, and the output ratio. In each of FIGS. 9 to 12, a line L1, a line L2, a line L3, and a line L4 represent the rotational speed command, the target rotational speed, the actual speed, and the output ratio, respectively.

FIG. 9 shows changes in the actual rotational speed in a state where the no-load integral gain is set as the integral gain while the industrial vehicle 10 that is transporting the load L brakes to a stop in a comparative example. The no-load integral gain is the integral gain suitable for the industrial vehicle 10 that has no load L to transport. Thus, in the case where the no-load integral gain is set as the integral gain of the industrial vehicle 10 that is transporting the load L, the integral gain is not suitable. As a result, as shown in FIG. 9, the industrial vehicle 10 swings back when the industrial vehicle 10 stops, and the actual rotational speed does not smoothly follow the target rotational speed.

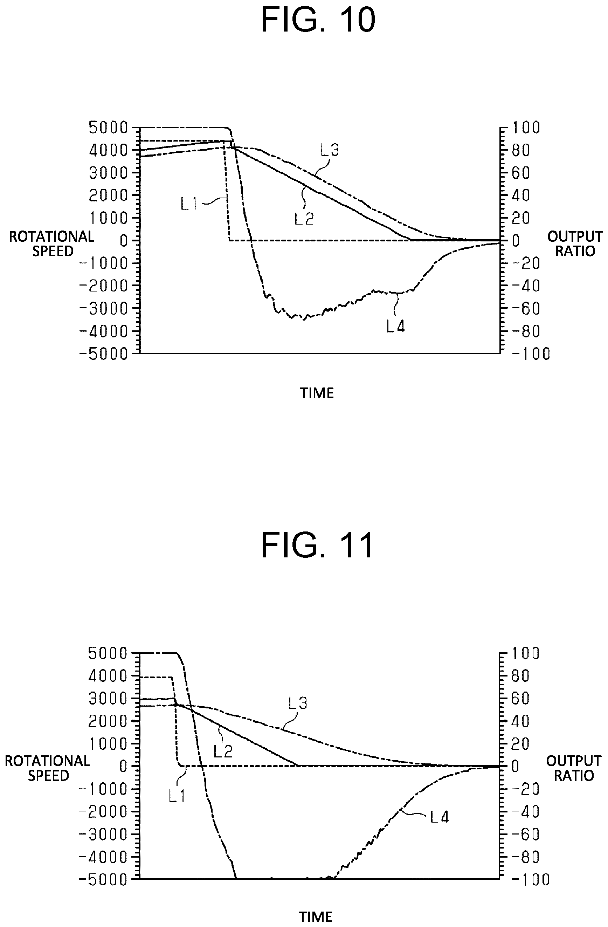

FIG. 10 shows changes in the actual rotational speed while the industrial vehicle 10 of the present embodiment in the no-load state brakes to a stop on a flat road. In the no-load state, the no-load integral gain is set as the integral gain in correspondence with the maximum output ratio, which is obtained in the range of the base rotational speed or less. Here, while the industrial vehicle 10 brakes to the stop, the actual rotational speed smoothly follows the target rotational speed.

FIG. 11 shows changes in the actual rotational speed while the industrial vehicle 10 of the present embodiment in the maximum load state brakes to a stop on the flat road. In the maximum load state, the maximum load integral gain is set as the integral gain in correspondence with the maximum output ratio, which is obtained in the range of the base rotational speed or less. Here, while the industrial vehicle 10 brakes to the stop, the actual rotational speed smoothly follows the target rotational speed.

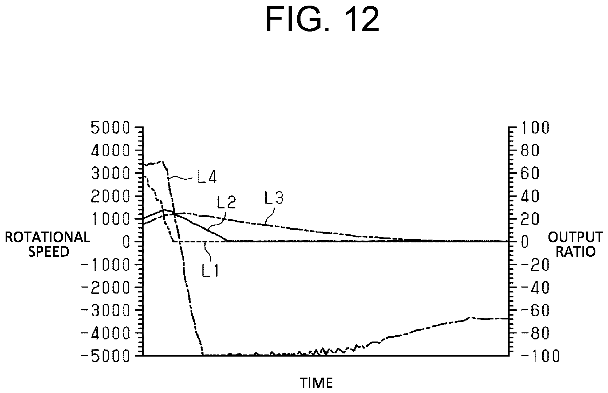

FIG. 12 shows changes in the actual rotational speed while the industrial vehicle 10 of the present embodiment in the maximum load state brakes to a stop on a slope. In the maximum load state, the maximum load integral gain is set as the integral gain in correspondence with the maximum output ratio, which is obtained in the range of the base rotational speed or less. Here, while the industrial vehicle 10 brakes to the stop, the actual rotational speed smoothly follows the target rotational speed.

As seen from FIGS. 10 to FIG. 12, the industrial vehicle 10 of the present embodiment smoothly brakes to the stop regardless of presence or absence of the motor load. In addition, the industrial vehicle 10 of the present embodiment smoothly brakes to the stop regardless of whether the road is the flat road or the slope.

### [Advantageous effects of the present embodiment]

(1) While the industrial vehicle 10 brakes to a stop, the controller 30 sets the integral gain based on the maximum output ratio obtained in the state where the rotational speed of the traveling motor 24 is equal to or less than the base rotational speed. In the range where the rotational speed of the traveling motor 24 is equal to or less than the base rotational speed, the maximum output ratio changes in accordance with the weight of the load L. Accordingly, the integral gain is set based on the maximum output ratio obtained in the state where the rotational speed of the traveling motor 24 is equal to or less than the base rotational speed, so that the integral gain is set so as to change in accordance with the weight of the load L. When the output ratio is calculated using this integral gain, the rotational speed of the traveling motor 24 smoothly follows the target rotational speed while the industrial vehicle 10 brakes to the stop.
(2) The controller 30 stores the maximum output ratio calculated while the rotational speed of the traveling motor 24 is kept at the base rotational speed or less. When the output ratio is calculated while the rotational speed of the traveling motor 24 is kept at the base rotational speed or less, the controller 30 stores the calculated output ratio as a new maximum output ratio when the calculated output ratio is more than the stored maximum output ratio. Thus, the controller 30 obtains the maximum output ratio calculated while the rotational speed of the traveling motor 24 is kept at the base rotational speed or less.
(3) The controller 30 sets the no-load integral gain as the integral gain when the maximum output ratio is equal to or less than the no-load output ratio reference value. The controller 30 sets the maximum load integral gain as the integral gain when the maximum output ratio is equal to or more than the maximum load output ratio reference value. The controller 30 sets the linear interpolation integral gain as the integral gain when the maximum output ratio is more than the no-load output ratio reference value and less than the maximum load output ratio reference value. This makes it possible to set the integral gain suitable for the weight of the load L. In addition, when the no-load integral gain and the maximum load integral gain are determined in advance, the linear interpolation integral gain is derived by the linear interpolation. Accordingly, the integral gain need not be determined individually in correspondence with the weight of the load L.
(4) The industrial vehicle 10 includes only the traveling motor 24 as the braking device. When the industrial vehicle 10 brakes to a stop using only the braking force of the traveling motor 24, it is necessary to stop the industrial vehicle 10 by controlling the rotational speed of the traveling motor 24. In this case, the rotational speed of the traveling motor 24 need follow the target rotational speed smoothly. In the present embodiment, the integral gain that changes in accordance with the weight of the load L is set. This causes the rotational speed of the traveling motor 24 to follow the target rotational speed smoothly while the industrial vehicle 10 brakes to the stop. Accordingly, even the industrial vehicle 10 that includes no mechanical brake is smoothly stopped.
(5) In Step S3, the integral gain calculator 46 determines whether or not the absolute value of the actual rotational speed is equal to or less than the base rotational speed and the target rotational speed is a value excluding zero. While the industrial vehicle 10 brakes to a stop, the output ratio determiner 41 performs the control such that the correction based on the integral term used in the proportional-integral control is applied to the speed error when the target rotational speed is zero. This is because a control such that the correction based on the integral term is applied to the speed error even when the target rotational speed is a value excluding zero causes the actual rotational speed to follow the target rotational speed in a short time, so that the deceleration of the industrial vehicle 10 is not to be constant. In this case, the deceleration of the industrial vehicle 10 that is not constant reduces maneuverability of the industrial vehicle 10. On the other hand, while the industrial vehicle 10 brakes to a stop, the output ratio determiner 41 perform the control such that the correction based on the integral term is applied to the speed error when the target rotational speed is zero, which suppresses the reduction of the maneuverability of the industrial vehicle 10. In addition, the integral gain is set until the correction based on the integral term is applied to the speed error by executing the process in which the maximum output ratio is updated when the target rotational speed is a value excluding zero.
(6) It is possible that the integral gain calculator 46 sets the integral gain that changes in accordance with the weight of the load L. Even when the industrial vehicle 10 does not include a load sensor for measuring the weight of the load L, the integral gain that changes in accordance with the weight of the load L is set, and thus, manufacturing costs are reduced as compared with a case where the industrial vehicle 10 includes the load sensor.

### [Modification]

The present embodiment may be modified as follows. The present embodiment and the following modification may be combined to each other as long as they do not technically contradict each other.

The integral gain may be associated with each of a plurality of sections into which a possible range of the maximum output ratio is classified. For example, the possible range of the maximum output ratio is defined as a range between 45 [%] and 98 [%]. In this case, the range of 45 [%] to 98 [%] is classified in correspondence with the motor load, such as a first section in correspondence with 0 [kg], a second section in correspondence with 500 [kg], and a third section in correspondence with 1000 [kg]. Then, each section is associated with a corresponding integral gain suitable for each section. For example, the first section is associated with an integral gain suitable for the industrial vehicle 10 in no-load state. The second section is associated with an integral gain suitable for the industrial vehicle 10 transporting the load L of 500 [kg]. The third section is made associated with an integral gain suitable for the industrial vehicle 10 transporting the load L of 1000 [kg].

The controller 30 calculates the maximum output ratio by the maximum output ratio calculation control. Then, the controller 30 sets the integral gain associated with the section to which the maximum output ratio belongs. For example, when the maximum output ratio belongs to the first section as described above, the controller 30 sets the integral gain associated with the first section.

The controller 30 may perform a proportional-integral-derivative control as the feedback control.

In Step S3, the integral gain calculator 46 may determine whether or not the absolute value of the actual rotational speed is equal to or less than the base rotational speed. That is, the integral gain calculator 46 need not determine whether the target rotational speed is a value excluding zero.

The controller 30 may obtain the output ratio when the rotational speed of the traveling motor 24 more than the base rotational speed decreases to the base rotational speed or less as the maximum output ratio in the state where the rotational speed of the traveling motor 24 is equal to or less than the base rotational speed.

The industrial vehicle 10 may include the mechanical brake.

The industrial vehicle 10 may be a towing tractor that transports the load L while towing that.

## Claims

1. An industrial vehicle (10) that transports a load (L), the industrial vehicle (10) comprising:
a traveling motor (24);
an inverter (22) that drives the traveling motor (24); and
a controller (30) that controls the inverter (22),
the controller (30) calculating an error between a rotational speed of the traveling motor (24) and a target rotational speed,
the controller (30) calculating an output ratio of the traveling motor (24) based on the error, a proportional gain, and an integral gain,
the controller (30) calculating a toque current command value based on the output ratio and a torque current curve, and
the controller (30) converting the toque current command value into a command value for the inverter (22) to perform a control of the traveling motor (24) such that the rotational speed of the traveling motor (24) follows the target rotational speed, **characterized in that**
while the industrial vehicle (10) brakes to a stop, the controller (30) sets the integral gain based on a maximum value of the output ratio in a state where the rotational speed of the traveling motor (24) is equal to or less than a base rotational speed.

2. The industrial vehicle (10) according to claim 1, **characterized in that**
the controller (30) stores the maximum value of the output ratio calculated while the rotational speed of the traveling motor (24) is kept at the base rotational speed or less, and
when the output ratio is calculated while the rotational speed of the traveling motor (24) is kept at the base rotational speed or less, the controller (30) stores the calculated output ratio as a new maximum value of the output ratio when the calculated output ratio is more than the stored maximum value of the output ratio.

3. The industrial vehicle (10) according to claim 1 or 2, **characterized in that**
the controller (30) sets a no-load integral gain as the integral gain when the maximum value of the output ratio is equal to or less than a no-load output ratio reference value,
the controller (30) sets a maximum load integral gain as the integral gain when the maximum value of the output ratio is equal to or more than a maximum load output ratio reference value,
the controller (30) sets a linear interpolation integral gain obtained by linear interpolation between the no-load integral gain and the maximum load integral gain as the integral gain when the maximum output ratio is more than the no-load output ratio reference value and less than the maximum load output ratio reference value,
the no-load output ratio reference value is set such that the maximum value of the output ratio becomes the no-load output ratio reference value or less when the industrial vehicle (10) has no load to transport, and
the maximum load output ratio reference value is set such that the maximum value of the output ratio becomes the maximum load output ratio reference value or more when the industrial vehicle (10) transports the load (L) of a maximum weight corresponding to a maximum loading capacity of the industrial vehicle (10).

4. The industrial vehicle (10) according to claim 1 or 2, **characterized in that**
the integral gain is associated with each of a plurality of sections into which a possible range of the maximum value of the output ratio is classified, and
the controller (30) sets the integral gain associated with the section to which the maximum value of the output ratio belongs.

5. The industrial vehicle (10) according to claim 1 or 2, **characterized in that**
the industrial vehicle (10) includes only the traveling motor (24) as a braking device.
